# EUROPÄISCHE PATENTSCHRIFT

(11) **EP 1 382 892 B1**
(45) Veröffentlichungstag und Bekanntmachung des Hinweises auf die Patenterteilung: **21.09.2005**
(21) Anmeldenummer: 03015237.5
(22) Anmeldetag: 05.07.2003
(51) Int. Cl.: F16J 15/08, B23K 11/00

(54) **Metallische Mehrlagen-Flachdichtung und Verfahren zu ihrer Herstellung**
Multi-layered metallic gasket and method for its manufacture
Joint plat métallique multi-couches et méthode pour sa fabrication

(30) Priorität: 17.07.2002 DE 10232339
(43) Veröffentlichungstag der Anmeldung: 21.01.2004
(73) Patentinhaber: ElringKlinger AG, 72581 Dettingen (DE)
(72) Erfinder: Jones, Robert, Darlington, Co. Durham DL3 8RE (GB)
(74) Vertreter: Hoeger, Stellrecht & Partner Patentanwälte

(56) Entgegenhaltungen:
- DE-A- 19 725 986
- US-A- 3 509 608

## Beschreibung

Bei mehrlagigen, zumindest im wesentlichen metallischen Flachdichtungen, wie Zylinderkopf- und Auspuffkrümmer-Dichtungen, müssen die Metallblechlagen so miteinander verbunden sein, daß in dem die Dichtung bildenden Lagenpaket die in den einzelnen Lagen vorgesehenen Durchgangsöffnungen, z. B. für das abzudichtende Medium und Befestigungsschrauben, miteinander fluchten. Hierzu geeignete Verbindungsverfahren sind das Laserschweißen und das elektrische Punktschweißen.

Nun werden gerade metallische Flachdichtungen immer häufiger mit Beschichtungen aus geeigneten Kunststoffen versehen, um die Mikroabdichtung zu verbessern und/oder einen dauerhaften Korrosionsschutz zu bewirken. Hierzu wird in der Regel mindestens eine der beiden Hauptoberflächen einer Flachdichtung beschichtet; es gibt aber auch mehrlagige metallische Flachdichtungen, bei denen auch die Innenseiten der beiden Lagen einer zweilagigen Dichtung, die Innenseiten der Außenlagen einer drei- oder mehrlagigen Dichtung und/oder mindestens eine Seite einer Innenlage einer drei- oder mehrlagigen Dichtung mit Beschichtungen versehen sind, nämlich dann, wenn die Abdichtung im Innern der Dichtung zwischen zwei gegeneinander anliegenden Lagen verbessert und/oder eine Innenkorrosion der Dichtung vermieden werden soll.

Da derartige Beschichtungen elektrisch nicht-leitende Schichten sind und ein Verbinden mehrerer Metallblechlagen durch elektrisches Punktschweißen voraussetzt, daß beim Einspannen der Dichtung zwischen den beiden Schweißelektroden sich ein guter Kontakt zwischen den Elektroden und der Dichtung sowie zwischen den aufeinandergeschichteten Lagen (und zwar vorzugsweise in dem Bereich zwischen den beiden Elektroden) ergibt, damit sich die erforderliche Spannung an die Dichtung anlegen läßt und der für das Verschweißen der Lagen miteinander erforderliche Strom fließen kann, stellt schon eine einzige Beschichtung ein Problem für das elektrische Punktschweißen dar.

Die Erfindung betrifft nun ein Verfahren zum Verbinden von wenigstens zwei Metallblechlagen einer Flachdichtung an mindestens einer Schweißstelle durch elektrisches Punktschweißen, wobei mindestens die eine Lage einseitig mit einer elektrisch isolierenden Beschichtung versehen ist. Um dennoch mit dem elektrischen Punktschweißen arbeiten zu können, wird ein solches Verfahren erfindungsgemäß derart gestaltet, daß durch Verformen der beschichteten Lage im Bereich der zu erzeugenden Schweißstelle auf der beschichteten Seite der Lage eine metallisch blanke Kontaktstelle für den Stromdurchgang erzeugt und sodann punktgeschweißt wird.

Aus der US-A-3 509 608 (Fig. 5) ergibt sich ein Verfahren zum Verbinden von zwei aufeinanderliegenden streifenförmigen Metallblechen, von denen eines auf seiner vom anderen Metallblech abgewandten Seite eine elektrisch isolierende Beschichtung aufweist. Das von den aufeinanderliegenden Blechen gebildete Lagenpaket wird so durchgestanzt, daß sich eine von den Blechen und der Beschichtung gebildete zungenartige Lasche aus dem Lagenpaket herausbiegen und auf das Lagenpaket zurückbiegen läßt. Sodann werden das Lagenpaket und die Lasche zwischen stempelartigen Punktschweißelektroden eingespannt und die Bleche durch elektrisches Punktschweißen miteinander verbunden, wobei der unterhalb der Lasche liegende Beschichtungsbereich weggebrannt werden soll.

Vorzugsweise wird bei einer Flachdichtung mit einer lediglich auf einer Seite beschichteten Blechlage erfindungsgemäß so vorgegangen, daß zur Bildung der Kontaktstelle auf der beschichteten Seite der Blechlage aus letzterer eine Blechlasche herausgebogen und auf die beschichtete Seite der Blechlage zurückgelegt wird, worauf zum Punktschweißen ein Schweißstrom in die Blechlasche eingeleitet wird. Besitzt eine Flachdichtung zwei jeweils nur auf ihrer Außenseite beschichtete Außenlagen, so wird für jede Schweißstelle aus jeder der beiden Außenlagen jeweils eine Blechlasche heraus- und auf die beschichtete Seite der betreffenden Lage zurückgebogen, so daß an der Schweißstelle auf jeder der beiden Hauptoberflächen der Dichtung jeweils eine metallisch blanke Blechlasche und damit eine Kontaktstelle entsteht. Entsprechendes gilt natürlich für eine Dichtung, bei der eine Außenlage nur auf ihrer Innenseite eine Beschichtung aufweist - in diesem Fall wird die Blechlasche auf die Innenseite der Außenlage zurückgelegt. Befindet sich eine erfindungsgemäße Blechlasche an der Außenseite, d. h. auf einer der beiden Hauptoberflächen der Dichtung, wird zum Punktschweißen die Schweißelektrode auf die Biegekante der Blechlasche oder in unmittelbarer Nachbarschaft der Biegekante auf die Blechlasche aufgesetzt - Versuche haben gezeigt, daß der Schweißstrom in einer mit einer solchen Blechlasche versehenen Blechlage problemlos um die Biegekante der Blechlasche bis zu einer solchen Stelle herumfließen kann, welche in der gedachten Verbindungslinie der beiden zum Punktschweißen eingesetzten, gegen das Lagenpaket gepreßten Schweißelektroden liegt.

Das erfindungsgemäße Verfahren eignet sich aber auch für solche Flachdichtungen, bei denen mindestens die eine der beiden Außenlagen beidseitig mit einer elektrische isolierenden Beschichtung versehen ist; dann wird erfindungsgemäß so vorgegangen, daß vor dem Beschichten der später eine der beiden Außenseiten der Dichtung bildenden Seite der Außenlage zur Bildung einer an der Innenseite der Außenlage gelegenen Kontaktstelle eine Blechlage aus der Außenlage herausgebogen und auf deren bereits beschichtete Innenseite zurückgelegt wird, und daß erst nach dem Punktschweißen die Außenseite der Außenlage beschichtet wird - es versteht sich von selbst, daß sich Außenseiten eines aus bereits miteinander verbundenen Blechlagen bestehenden Lagenpakets ebenso problemlos beschichten lassen wie eine Seite oder beide Seiten einer einzigen Metallblechlage.

Gegenstand der Erfindung ist auch eine Flachdichtung mit mehreren an mindestens einer Schweißstelle durch elektrisches Punktschweißen miteinander verbundenen Metallblechlagen, von denen mindestens eine lediglich auf ihrer einen, ersten Seite mit einer vor dem Schweißen aufgebrachten, elektrisch isolierenden Beschichtung versehen ist. Wie sich aus der vorstehenden Beschreibung des erfindungsgemäßen Verfahrens ergibt, zeichnet sich eine solche erfindungsgemäße Flachdichtung dadurch aus, daß im Bereich der Schweißstelle zur Bildung einer metallisch blanken Kontaktstelle auf der beschichteten Seite der Blechlage aus dieser eine Blechlasche herausgebogen und auf die beschichtete Seite der Blechlage zurückgelegt ist und daß die Schweißstelle im Bereich der Biegekante oder in deren Nachbarschaft auf der Blechlasche liegt.

Da durch eine umgelegte Blechlasche die Gesamtdicke des Lagenpakets vergrößert wird, empfiehlt es sich, die Blechlasche an einer solchen Stelle der Dichtung anzuordnen, welche bei eingebauter Dichtung nicht oder zumindest nicht nennenswert gepreßt wird, z. B. an einer Stelle, an der mindestens in einer der Dichtflächen der die Dichtung zwischen sich aufnehmenden Bauteile eine Öffnung oder Vertiefung aufweist.

Speziellere, vorteilhafte Ausführungsformen erfindungsgemäßer Flachdichtungen ergeben sich aus den Ansprüchen 5 und 6.

Anhand der beiliegenden Zeichnungen sollen nun drei Ausführungsformen der erfindungsgemäßen Flachdichtung näher erläutert werden, bei denen die Kontaktstelle für den Stromdurchgang stets durch Bildung und Umbiegen einer Blechlasche erzeugt wurde; in der Zeichnung zeigen:
- Fig. 1: eine Draufsicht auf einen Teil einer im wesentlichen metallischen und mehrere aufeinandergeschichtete Blechlagen aufweisenden erfindungsgemäßen Flachdichtung, bei der es sich um eine sogenannte Auspuffkrümmerdichtung handeln kann;
- Fig. 2: einen Schnitt nach der Linie 2-2 in Fig. 1, und
- Figuren 3 und 4: der Fig. 2 entsprechende Schnittdarstellungen durch zwei weitere Ausführungsformen.

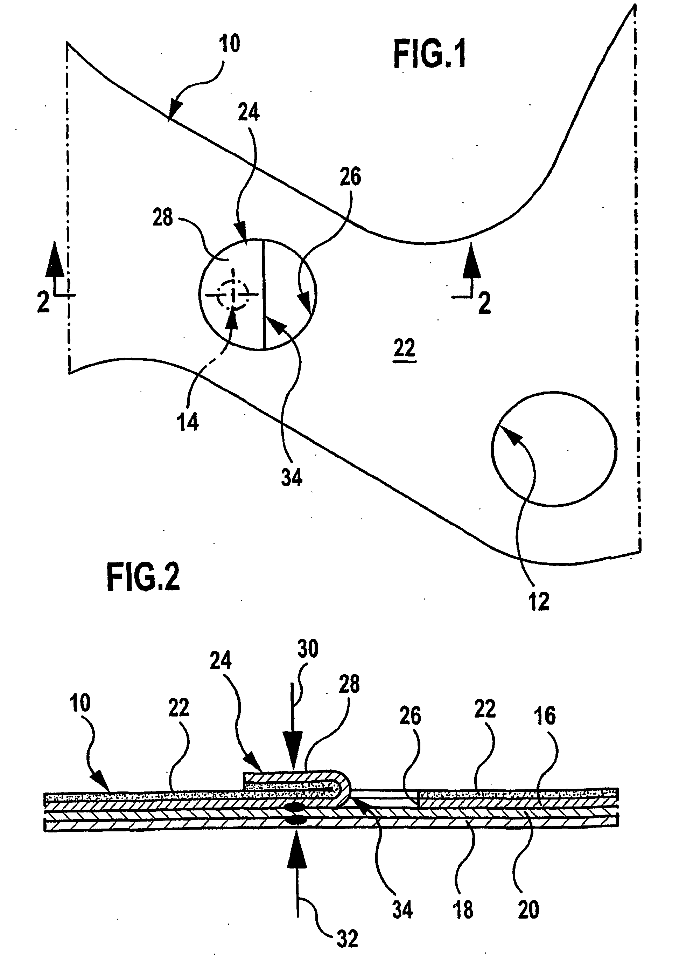

Die Fig. 1 zeigt eine Draufsicht auf einen Teil einer erfindungsgemäßen Flachdichtung 10, und zwar auf einen Teil, welcher eine Durchgangsöffnung 12 für eine Schraube zum Einspannen der Flachdichtung sowie eine Schweißstelle 14 beinhaltet, an der die verschiedenen aufeinandergeschichteten Metallblechlagen der Flachdichtung 10 durch elektrisches Punktschweißen miteinander verbunden sind.

Bei der in Fig. 2 dargestellten Ausführungsform besitzt die Flachdichtung zwei Metallblech-Außenlagen 16 und 18 sowie eine zwischen diesen angeordnete Metallblech-Innenlage 20. Bei dieser Ausführungsform ist nur die eine der beiden Hauptoberflächen der Flachdichtung mit einer Beschichtung 22 versehen, welche auf die eine Seite der Außenlage 16 aufgetragen wurde, und zwar auf die dann später in der Dichtung außenliegende Seite der Lage 16.

Aus der mit der Beschichtung 22 versehenen Außenlage 16 wurde vor dem Zusammenfügen des Lagenpakets eine Blechzunge 24 herausgebogen; hierzu wurde die Außenlage 16 längs einer Schnittkante 26 durchgestanzt (samt ihrer Beschichtung), worauf die so entstandene Blechzunge 24 um 180° umgebogen und auf die beschichtete Seite der Außenlage 16 zurückgelegt wurde. Auf diese Weise wurde auf der beschichteten Seite der Außenlage 16 eine metallisch blanke Kontaktstelle 28 erzeugt, auf die sich eine erste, in Fig. 2 durch einen Pfeil angedeutete Schweißelektrode 30 aufsetzen läßt. Nach dem Aufsetzen einer zweiten Schweißelektrode 32 auf die metallisch blanke Außenseite der Außenlage 18 derart, daß sich die beiden Schweißelektroden 30, 32 gegenüberliegen, erfolgt die elektrische Punktschweißung, so daß die in Fig. 1 gezeigte Schweißstelle 14 entsteht, in deren Bereich die drei Lagen 16, 18, 20, wie in Fig. 2 angedeutet, punktförmig miteinander verschweißt sind.

Die Fig. 2 stellt die Verhältnisse nicht maßstabsgetreu dar - in der Regel liegt die Dicke einer Metallblechlage einer mehrlagigen metallischen Flachdichtung in der Größenordnung von 0,2 mm, während die Kontaktfläche einer zum Punktschweißen verwendeten Schweißelektrode einen Durchmesser in der Größenordnung von mindestens 1 mm hat. Aufgrund dieser Abmessungsverhältnisse und der Tatsache, daß Schweißelektroden zum Punktschweißen im Kontaktbereich häufig aus Messing oder dergleichen bestehen, muß die Schweißstelle 14 nicht, wie in Fig. 1 dargestellt, im Abstand von der Biegekante 34 der Blechzunge 24 auf der Kontaktstelle 28 liegen; vielmehr könnte die Schweißelektrode 30 auch so positioniert sein, daß sie zu beiden Seiten der Biegekante 34 einerseits auf der Blechzunge 24 und andererseits auf der metallisch blanken Oberfläche der Innenlage 20 aufliegt, da Versuche gezeigt haben, daß auch dann die mit der Blechzunge versehene Blechlage mit der angrenzenden Lage verschweißt wird. Bevorzugt werden jedoch Ausführungsformen, bei denen die Schweißelektrode 30 die an die mit der Blechzunge versehene Lage angrenzende Blechlage nicht kontaktiert - bei der in Fig. 2 dargestellten Ausführungsform fließt der Schweißstrom problemlos längs eines U-förmigen Strompfades um die Biegekante 34 herum bis zu einer Stelle der Blechlage 16, welche der anderen Schweißelektrode 32 gegenüberliegt, und von dort senkrecht durch das Lagenpaket bis zur Schweißelektrode 32.

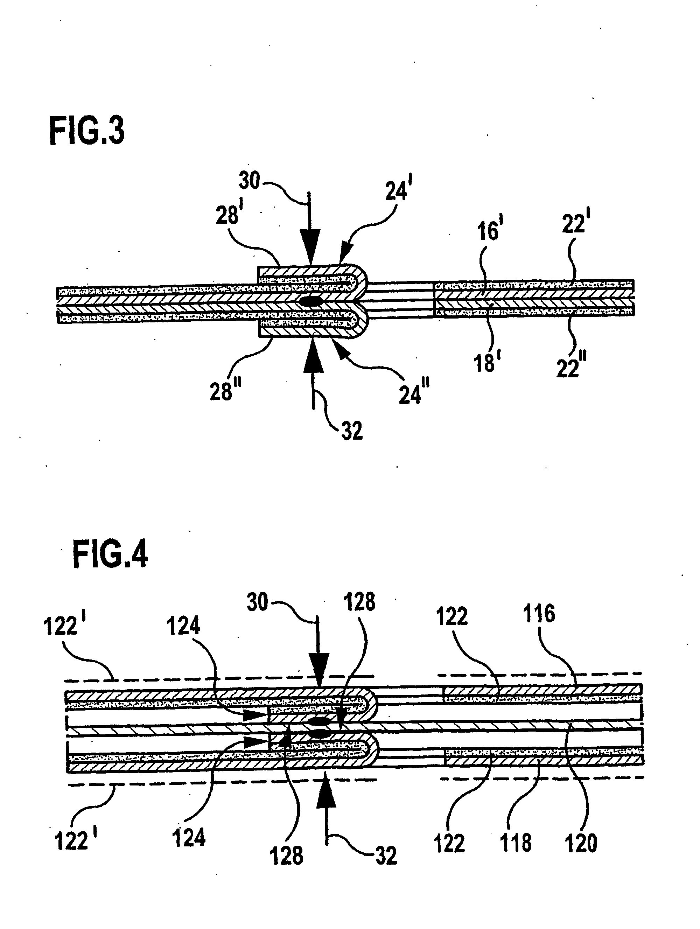

Die Fig. 3 zeigt eine Ausführungsform ähnlich derjenigen gemäß Fig. 2; bei dieser zweiten Ausführungsform handelt es sich jedoch um eine nur zweilagige Dichtung mit zwei Lagen 16' und 18', die jeweils einseitig mit einer Beschichtung 22' bzw. 22" versehen sind, wobei die Beschichtungen an den beiden Hauptoberflächen der Dichtung liegen. Aus den beiden Lagen 16' und 18' wurde in der im Zusammenhang mit Fig. 2 beschriebenen Weise jeweils eine Blechzunge 24' bzw. 24" herausgebogen, um an beiden Hauptoberflächen der Dichtung jeweils eine metallisch blanke Kontaktstelle 28' bzw. 28" zu schaffen. Die beiden Schweißelektroden wurden wieder mit 30 und 32 bezeichnet, und zwischen diesen Elektroden sind die beiden Lagen 16' und 18', wie in Fig. 3 angedeutet, durch einen Schweißpunkt miteinander verbunden.

Die Fig. 4 zeigt wieder eine dreilagige Dichtung mit zwei Außenlagen 116 und 118 sowie einer zwischen diesen angeordneten Innenlage 120. Die letztere ist unbeschichtet, während die beiden Außenlagen auf ihren in der Dichtung innenliegenden Seiten jeweils mit einer Beschichtung 122 versehen sind, und zwar schon vor dem Verschweißen der drei Blechlagen miteinander.

Aus den beiden Außenlagen 116 und 118 wurde in der im Zusammenhang mit Fig. 2 beschriebenen Weise jeweils eine Blechzunge 124 herausgebogen, um so unter bzw. über den Beschichtungen 122 jeweils eine metallisch blanke Kontaktstelle 128 zu schaffen. Im zusammengefügten Lagenpaket liegen die beiden Kontaktstellen 128 gegen die metallisch blanken Hauptoberflächen der Innenlage 120 an, so daß nach dem Einspannen des Lagenpakets zwischen zwei einander gegenüberliegende Schweißelektroden 30 und 32 die drei Lagen durch Punktschweißen miteinander verbunden werden können - bis zur Durchführung des Schweißvorgangs sind die beiden Hauptoberflächen der Flachdichtung, d. h. die Außenseiten der beiden Außenlagen 116 und 118, metallisch blank und unbeschichtet. Nach dem Verschweißen der Blechlagen wurden die Außenseiten der beiden Außenlagen 116 und 118, d. h. die beiden Hauptoberflächen der Flachdichtung, jeweils mit einer Beschichtung 122' versehen, welche in Fig. 4 gestrichelt angedeutet wurden.

## Patentansprüche

1. Verfahren zum Verbinden von wenigstens zwei Metallblechlagen (16,18) einer Flachdichtung (10) an mindestens einer Schweißstelle (14) durch elektrisches Punktschweißen, wobei mindestens eine der Lagen (16) einseitig mit einer elektrische isolierenden Beschichtung (22) versehen ist, **dadurch gekennzeichnet, daß** vor dem Zusammenfügen der Metallblechlagen, durch Verformen der beschichteten Lage (16) im Bereich der zu erzeugenden Schweißstelle (14) auf der beschichteten Seite der Lage (16) eine metallisch blanke Kontaktstelle (28) für den Stromdurchgang erzeugt und sodann geschweißt wird.

2. Verfahren nach Anspruch 1, **dadurch gekennzeichnet, daß** zur Bildung der Kontaktstelle (28) auf der beschichteten Seite der Blechlage (16) aus letzterer eine Blechlasche (24) herausgebogen und auf die beschichtete Seite der Blechlage (16) zurückgelegt wird, worauf zum Punktschweißen ein Schweißstrom in die Blechlasche (24) eingeleitet wird.

3. Verfahren nach Anspruch 1 für eine Flachdichtung (10) mit einer beidseitig beschichteten Außenlage, (16,18) **dadurch gekennzeichnet, daß** vor dem Beschichten der Außenseite der Außenlage (18) zur Bildung einer an der Innenseite der Außenlage gelegenen Kontaktstelle eine Blechlasche aus der Außenlage herausgebogen und auf deren Innenseite zurückgelegt wird, und daß nach dem Punktschweißen die Außenseite der Außenlage (18) beschichtet wird.

4. Flachdichtung (10) mit mehreren an mindestens einer Schweißstelle (14) durch elektrisches Punktschweißen miteinander verbundenen Metallblechlagen (16,18), von denen mindestens eine lediglich auf ihrer einen, ersten Seite mit einer vor dem Schweißen aufgebrachten, elektrisch isolierenden Beschichtung (22) versehen ist, **dadurch gekennzeichnet, daß** im Bereich der Schweißstelle (14) (zur Bildung einer metallisch blanken Kontaktstelle (28) auf der beschichteten Seite der Blechlage (16) nur) aus dieser Blechlage eine Blechlasche (24) herausgebogen und auf die beschichtete Seite der Blechlage zurückgelegt ist und daß die Schweißstelle (14) im Bereich der Biegekante (34) oder in deren Nachbarschaft auf der Blechlasche liegt.

5. Flachdichtung nach Anspruch 4, bei der die beschichtete Blechlage eine Außenlage der Dichtung bildet, **dadurch gekennzeichnet, daß** die Blechlasche (24) auf die beschichtete Außenseite der beschichteten Blechlage (16) zurückgelegt und die Innenseite dieser Blechlage unbeschichtet ist.

6. Flachdichtung nach Anspruch 4, bei der die beschichtete Blechlage eine Außenlage der Dichtung bildet, **dadurch gekennzeichnet, daß** die Blechlasche (124) auf die erste, die Innenseite der beschichteten Blechlage (116) bildende Seite dieser Blechlage zurückgelegt und die Außenseite dieser Blechlage samt Schweißstelle mit einer zweiten Beschichtung (122') versehen ist.

## Claims

1. Method of connecting at least two sheet metal layers (16, 18) of a gasket (10) at at least one welding point (14) by electrical spot welding, wherein at least one of the layers (16) is provided at one side with an electrically insulating coating (22), **characterized in that**, before joining of the sheet metal layers, by deforming the coated layer (16) in the region of the welding point (14) to be produced a bare metal contact point (28) for the passage of current is produced at the coated side of the layer (16) and is then welded.

2. Method according to claim 1, **characterized in that**, for forming the contact point (28) at the coated side of the sheet metal layer (16), a sheet metal flap (24) is bent out from the sheet metal layer (16) and folded back onto the coated side of the sheet metal layer (16) and then for the spot welding operation a welding current is introduced into the sheet metal flap (24).

3. Method according to claim 1 for a gasket (10) comprising an outer layer (16, 18) coated on both sides, **characterized in that**, prior to coating of the outer side of the outer layer (18), for forming a contact point situated at the inner side of the outer layer a sheet metal flap is bent out from the outer layer and folded back onto the inner side thereof, and that after the spot welding operation the outer side of the outer layer (18) is coated.

4. Gasket (10) comprising a plurality of sheet metal layers (16, 18), which are connected to one another at at least one welding point (14) by electrical spot welding and of which at least one is provided only at its one, first side with an electrically insulating coating (22) that is applied prior to the welding operation, **characterized in that** in the region of the welding point (14), for forming a bare metal contact point (28) at the coated side of the sheet metal layer (16), a sheet metal flap (24) is bent out from this sheet metal layer only and folded back onto the coated side of the sheet metal layer and that the welding point (14) lies in the region of the bending edge (34) or in the vicinity thereof on the sheet metal flap.

5. Gasket according to claim 4, in which the coated sheet metal layer forms an outer layer of the gasket, **characterized in that** the sheet metal flap (24) is folded back onto the coated outer side of the coated sheet metal layer (16) and the inner side of this sheet metal layer is uncoated.

6. Gasket according to claim 4, in which the coated sheet metal layer forms an outer layer of the gasket, **characterized in that** the sheet metal flap (124) is folded back onto the first side of the coated sheet metal layer (116) that forms the inner side of said sheet metal layer and the outer side of said sheet metal layer together with welding point is provided with a second coating (122').

## Revendications

1. Méthode pour assembler deux couches de tôles métalliques au moins (16, 18) d'un joint plat (10) en un lieu de soudage (14) au moins, par soudage électrique par points, une des couches (16) au moins étant munie sur un côté d'un revêtement à propriété électro-isolante (22), **caractérisée en ce qu'**avant l'assemblage des couches de tôles métalliques, moyennant déformation de la couche revêtue (16) au niveau du point de soudage (4) à réaliser sur le côté revêtu de la couche (16), on crée un point de contact (28) métallique nu destiné au passage du courant, le soudage étant ensuite effectué.

2. Méthode selon la revendication 1, **caractérisée en ce que** pour la création du point de contact (28) sur le côté revêtu de la couche de tôles (16), on réalise une patte (24) à partir de cette dernière et on la replie sur le côté revêtu de la couche de tôles (16), un courant de soudage étant ensuite introduit dans ladite patte (24) pour effectuer le soudage par points.

3. Méthode selon la revendication 1 pour un joint plat (10) avec une couche extérieure (16, 18) recouverte sur les deux côtés, **caractérisée en ce que** préalablement au revêtement du côté extérieur de la couche extérieure (18), en vue de la création d'un point de contact sur le côté intérieur de la couche extérieure, on replie une patte à partir de la couche extérieure, pour la renverser sur son côté intérieur, et qu'à la suite du soudage par points, le côté extérieur de la couche extérieure (18) est muni d'un revêtement.

4. Joint plat (10) avec plusieurs couches de tôles métalliques (16,18) reliées entre elles par soudage électrique par points effectué en un lieu de soudage (14) au moins, couches de tôles métalliques dont une au moins est munie sur son premier côté d'un revêtement électro-isolant (22) appliqué préalablement au soudage, **caractérisé en ce qu'au** niveau du lieu de soudage (14) (en vue de la création d'un point de contact (28) métallique nu sur le côté revêtu de la couche de tôles (16)) une patte (24) en tôle est réalisée exclusivement à partir de cette couche et repliée sur le côté revêtu de la couche, et que le lieu de soudage (14) se trouve au niveau de l'arête de pliage (34) ou à proximité de celle-ci, sur la patte en tôle.

5. Joint plat selon la revendication 4, où la couche de tôles revêtues forme une couche extérieure du joint, **caractérisé en ce que** la patte en tôle (24) est repliée sur le côté extérieur revêtu de la couche de tôles revêtues (16) **et que** le côté intérieur de cette couche de tôles n'est pas revêtu.

6. Joint plat selon la revendication 4, où la couche de tôles revêtues forme une couche extérieure du joint, **caractérisé en ce que** la patte en tôle (124) est repliée sur le premier côté de cette couche, côté formant le côté intérieur de la couche de tôles revêtues (116) et que le côté extérieur de cette couche de tôles, dont le lieu de soudage, est muni d'un deuxième revêtement (122').
